# EUROPEAN PATENT APPLICATION

(11) **EP 4 215 451 A1**
(43) Date of publication of application: **26.07.2023**
(21) Application number: 23151948.9
(22) Date of filing: 17.01.2023
(51) Int. Cl.: B65D 19/00

(54) **PLASTIC PALLET AND METHOD OF MAKING PLASTIC PALLET**

(30) Priority: 21.01.2022 HU 2200060 U; 21.01.2022 HU 2200020
(71) Applicant: Takács, Szabolcs, 3390 Füzesabony (HU)
(72) Inventor: Takács, Szabolcs, 3390 Füzesabony (HU)
(74) Representative: Dwornik, Marek

(57) **Abstract**

The subject of the invention is a plastic pallet (100), the essence of which is that it is formed from a plurality of solid elements (10) in the shape of a prism, which are fastened together, said elements (10) being formed from a molten mass (13) by melting and mixing thermoplastic waste (12), by moulding the mass (13) into the shape of a prism.

The invention also relates to a method of making such a plastic pallet (100).

## Description

The invention relates to a plastic pallet made of a plurality of solid elements in the shape of a slab, which are fastened together and made of recycled plastic.

The invention also relates to a method of making such a plastic pallet.

Pallets of various sizes and designs are widely used for the bulk handling and transport of goods. As pallets are moved with the goods to be transported, low weight and adequate strength are important. At the same time, ease of production and low price are also important considerations, without prejudice to the ease with which the pallets can be repaired. One of the materials that meets these criteria is wood. It is well known that pallets are usually made of wood. But fewer people know that wooden pallets provide an excellent breeding ground for fungi and other pathogens during packaging and storage. This is a problem in itself, but in the food and pharmaceutical industries it is downright unacceptable. The use of wood also creates a significant environmental burden. Over the last decade, an average of 13 million hectares of forest have been lost each year - 2,600 million m³/year. It is estimated that 100 million m³/year of this is cut down for pallets and other wooden packaging materials.

In addition to wooden pallets, plastic pallets are becoming increasingly popular, which have several advantages over wood. Plastic is more durable than wood, does not absorb moisture, is resistant to insects, fungi and other microorganisms, and is easier to clean due to its non-porous structure. The latter is particularly advantageous for food applications.

Several solutions for the production of plastic pallets are known from the state of the art. For example, patent application WO 2007098566 discloses a pallet with a plastic core and at least one plastic protective layer. The protective layer is formed by reactive injection moulding. Patent application WO 1997025250 also covers a lightweight plastic pallet with a thermoplastic core. In the solution described, the pallet is made of a thermoformed plastic mass. The thermoplastic is selected from the group consisting of polyolefins, PVC, ABS, styrenic plastic (PS), polyamides (PA), and polycarbonates (PC). The structural design of the pallet can be made of several layers, in which case at least one layer is foamed plastic.

State of the art plastic pallets are mostly produced by injection moulding or vacuum moulding. As a result, the pallet is formed as a single piece or from a few larger, complexly shaped pieces. A further characteristic of these processes is that the resulting pieces are typically hollow or lattice-like in structure.

The disadvantage of the above solutions is that the tools required for injection moulding are very expensive, moreover, only one type of pallet can be made with one tool. Due to the large number of commercially available pallet types, this represents a very large expense for a pallet manufacturing company. Another disadvantage of injection-moulded plastic pallets is limited and difficult repairability. Since the pallets consist of a single piece, the damaged part cannot be simply replaced, i.e. the entire pallet is scrapped. In the case of pallets consisting of a few larger pieces, an additional disadvantage is that the latticed, hollow structure of the pieces does not allow for mechanical fastening, so special fastening techniques, typically gluing or welding, are used for these. However, these fixings make it difficult or impossible to replace the damaged element, which also leads to the scrapping of the entire pallet.

Another important disadvantage of injection moulded pallets is that injection moulding requires a suitable quality of plastic granulate, which is specially produced for this purpose. This both increases production costs and has an environmental impact.

We recognised that huge amounts of various types of plastic (PP, PE, PET, HDPE, etc.) contaminated with all kinds of substances accumulate in landfills indiscriminately. These are mostly functional plastic products from domestic use, the recycling of which is not easy, but at the same time, it is a key task from the point of view of our environment.

We recognised that from this unsorted and mixed plastic waste, often contaminated with other organic and inorganic material, a molten plastic mass can be made by melting and solidifying it into prism-shaped solid elements for pallet production. It is also recognised that the elements thus produced can be machined, i.e. sawed and nailed, using the same methods and tools as those used in the production of wood-based panels. If the size of the block produced from the molten mass is the same as the 'prism' used in the production of wood-based panels (e.g. (e.g. 2500x1000x100 mm) and the elements are cut from this block, the whole production process can be carried out with the existing tools available to the wood pallet manufacturers, which compared to the transition to injection moulding is a huge advantage.

It was also recognised that, by nailing the elements together, the plastic pallet according to the invention could be repaired in the same way as a wooden pallet, i.e. element by element. In this way, the environmental impact can be further reduced.

It is an object of the present invention to provide a plastic pallet and a method of making such a pallet free from the disadvantages of prior art solutions. In particular, the invention aims to provide a plastic pallet which can be machined and assembled using the same tools and methods as for wooden pallets, which can be repaired in a similar way to wooden pallets, and which at the same time reduces the environmental impact of plastic waste.

According to the invention, the task was solved with a plastic pallet whose elements, in terms of their size, shape and their attachment to each other, are essentially the same as the prism-shaped elements used in wooden pallets. The elements of the plastic pallet according to the invention are made using mixed plastic waste containing mostly thermoplastics by melting the plastic waste and moulding the resulting molten mass into a prism shape. In a preferred embodiment, the elements are formed from a rectangular solid block by cutting the block to the appropriate size, which block is created by shaping and thermoforming the molten mass.

Furthermore, the task was solved according to the invention by a method in which thermoplastic waste is melted to produce a molten plastic mass. The molten mass is moulded into a prism shape, for example by means of a press tool or a mould. From the solidified mass moulded into a prism shape, prism-shaped solid elements are formed by either shaping the mass into the shape of the elements in advance or by moulding the mass into a rectangular block and cutting the elements from this block. Finally, the solid elements in the shape of a prism are fastened together, preferably by nailing.

The essence of the invention is that the plastic pallet is made of plastic elements that can be machined and cut to size using tools used in woodworking, such as a band saw, and can be nailed in the same way as wood.

Some preferred embodiments of the invention are defined in the dependent claims.

Further details of the invention are described by means of embodiments and drawings. In the drawing
Figure 1 is a schematic perspective view of an exemplary embodiment of a plastic pallet according to the invention;
Figure 2 is a schematic view of an exemplary embodiment of a block according to the invention;
Figure 3 is a schematic block diagram depicting the main elements and steps of a method according to the invention.

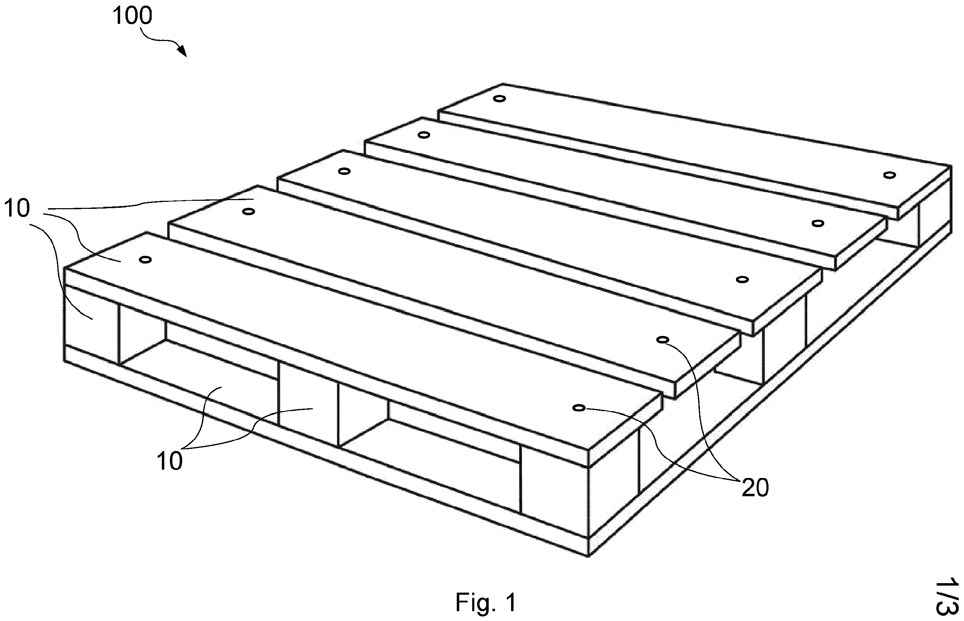

Figure 1 is a schematic perspective view of an exemplary embodiment of a plastic pallet 100 according to the invention. The pallet 100 is formed of a plurality of prism-shaped solid elements 10, which are fastened together, i.e. fixed to each other. Preferably, the pallet 100 is identical in appearance and design to a conventional wooden pallet. The sizing of each of the elements 10 will depend on the type of pallet 100, but the sizing of the elements 10 is essentially the same as the standard elements used for the same type of wooden pallets. It is noted that in the context of the present invention, a prism is understood to be a polyhedron having two parallel faces of a polygon that are congruent and the other faces of a polyhedron being a parallelogram, as is known to the person skilled in the art. Preferably, the elements 10 according to the invention are in the form of a right prism, more preferably in the form of a rectangular cuboid, as can be seen in Figure 1, or, the elements 10 may be in the form of a cube.

In a particularly preferred embodiment, the prism-shaped solid elements 10 are fastened together by nailing, using nails 20. Nailing can be done manually, with a hammer, or with a nailing machine commonly used in pallet manufacture. It should be noted that the elements 10 or parts of the elements 10 may be fastened together in other ways, such as by screwing, welding or gluing (not shown in the drawings), as known to the person skilled in the art.

The elements 10 are made from a molten plastic mass 13 formed by melting and mixing thermoplastic waste 12 and moulding the mass 13 into a prism shape. In other words, the elements 10 are obtained from the molten plastic mass 13, formed by melting and mixing thermoplastic waste 12, by moulding the plastic mass 13 into a prism shape. In a particularly preferred embodiment, the molten mass 13 is formed using a mixed composition of thermoplastic waste 12, which is an unsorted (unclassified) mixture of several types of plastics, typically thermoplastics. The thermoplastic waste 12 may contain small amounts of other organic or inorganic contaminants such as grease, paper, metal, etc. It may therefore be useful to clean the thermoplastic waste 12 and remove any other inappropriate materials before melting. It is also noted that non-thermoplastic plastics may be present in plastic waste, but their proportion in industrial and communal waste is generally low and therefore does not significantly affect the composition of the mass 13. Based on experience, thermoplastic components are predominant in thermoplastic waste 12.

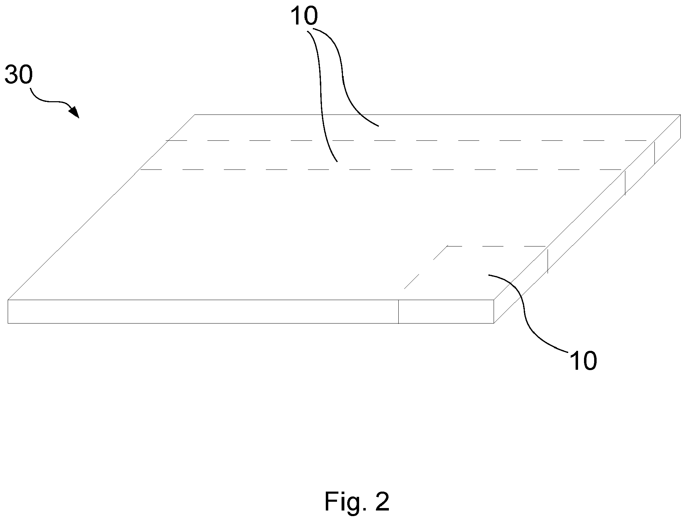

The colour of the mass 13 formed from the mixed thermoplastic waste 12 and the elements 10 is usually black, which is not a relevant characteristic for pallet production. However, colouring materials can be mixed with the mass 13, if necessary, to produce different coloured elements 10. The mass 13 can be used to form the elements 10 in a number of different ways, which will be discussed in more detail below. In a preferred embodiment, the elements 10 are pressed elements 10 obtained by pressing and solidifying the molten mass 13. The pressing may be carried out, for example, in moulds having the shape of the elements 10, under pressure, thereby directly forming the elements 10 from the mass 13. In a preferred embodiment, however, the prism-shaped solid elements 10 are formed from a prism-shaped block 30 obtained by compression moulding the molten mass 13 by cutting the block 30 to size. The advantage of this method is that it is essentially the same as the technique used in the manufacture of wooden pallets, with the difference that the starting material is not a wooden block cut from a log, but the block 30 obtained by moulding the mass 13. The block 30 is preferably in the shape of a flat rectangular body, as shown, for example, in Figure 2. The elements 10 are formed by cutting the block 30 to size, for example using a band saw. In Figure 2, dashed lines indicate the locations of the cuts, which define the shape of the elements 10. The advantage of the block 30 is that it is not necessary to provide separate moulds for the elements 10 of different sizes required for the pallet 100, as the block 30 can be used to form elements 10 of different sizes, using the familiar sawing process used in the production of wooden pallets.

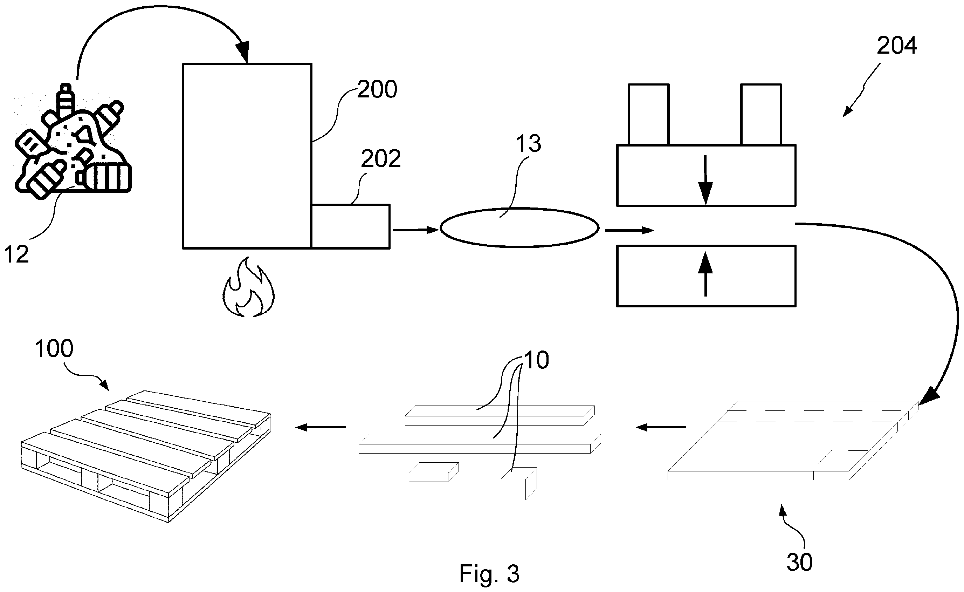

In the following, the method according to the invention is described with reference to Figure 3.

During the method, the thermoplastic waste 12 described above is melted and mixed, creating a molten mass 13. Since the thermoplastic waste 12 contains a mixture of different types of thermoplastics, no clear melting point can be determined. The main thing is to melt most of the thermoplastic waste 12, and experience shows that temperatures of 200-300 degrees Celsius, preferably 240-280 degrees Celsius, are sufficient. The process does not necessarily require that all materials reach the temperature required for melting. In any case, the thermoplastic waste 12 may contain components (e.g. metals) that do not melt at all or only at much higher temperatures, as mentioned above. However, these components are embedded in the mass 13, so their presence is not a disadvantage. The thermoplastic waste 12 can be mixed, for example, by means of a melting apparatus 200 designed as a heated metal container. In one possible embodiment, prior to melting the thermoplastic waste 12, the thermoplastic waste 12 is optionally shredded into smaller pieces, for example using a shredding machine known per se. In order to increase the mechanical stability or homogeneity of the mass 13, the thermoplastic waste 12 is mixed during or after melting. The mixing can be done either intermittently or continuously by means of a mixer arranged in the melting apparatus 200 (not shown in the figure). This creates new bonds in the mass 13 at the molecular level, which ensure the appropriate mechanical stability and strength of the elements 10 made of the mass 13.

The mass 13 produced in the melting apparatus 200 is preferably removed from the melting apparatus 200 by means of an extruder 202, which may for example be a screw extruder 202.

In the next step of the method according to the invention, the molten mass 13 is shaped into a prism shape. In the possible embodiment shown in Figure 3, the mass 13 is fed into a press 204, for example by means of a conveyor belt (not shown) or by manual force. Here, the molten mass 13 is formed into a prism shape by pressing. After solidification of the mass 13, the final product is a solid, flat rectangular block 30. In another possible embodiment (not shown in the figures), the mass 13 is placed in moulds corresponding to the elements 10 and left to set.

In the next step of the method, prism-shaped solid elements 10 are formed from the prism-shaped, solidified mass 13. In the embodiment shown in Figure 3, this is done by cutting the block 30 to size. The advantage of this is that the block 30 can be made into elements 10 of almost any shape using familiar sawing techniques. The disadvantage is that it requires one more machining operation (sawing). In contrast, in the embodiment with moulds, the elements 10 can be used immediately out of the mould without the need for further machining operations. The disadvantage is that each of the elements 10 requires a separate mould. It is noted that the surface of the dies of the press 204 or the inside of the moulds may be patterned, so that a pattern (e.g. a wood grain pattern) can be formed on the surface of the elements 10.

In the next step of the method, after the elements 10 have been created, the prism-shaped solid elements 10 are fastened together to create the pallet 100. It is recognised that the solid, prism-shaped design of the elements 10 allows the elements 10 to be nailed together. Therefore, in a particularly preferred embodiment, the prism-shaped solid elements 10 are fastened together by nailing using nails 20, similar to the technique used for the wooden pallets. It is noted that, although nailing the elements 10 is one of the most practical fastening methods from a procedural point of view, the elements 10 can be attached to each other in other ways.

Various modifications to the above disclosed embodiments will be apparent to a person skilled in the art without departing from the scope of protection determined by the attached claims.

## Claims

1. A plastic pallet (100) **characterised in that** it is formed of a plurality of prism-shaped solid elements (10) made of thermoplastic waste (12), which are fastened together.

2. The plastic pallet (100) according to claim 1, **characterised in that** the prism-shaped solid elements (10) are fastened to each other by means of nails.

3. The plastic pallet (100) according to claim 1 or 2, **characterised in that** the elements (10) are pressed elements (10) comprising thermoplastic waste (12).

4. The plastic pallet (100) according to any one of claims 1 to 3, **characterised in that** the prism-shaped solid elements (10) are right prisms, preferably rectangular cuboids.

5. The plastic pallet (100) according to any one of claims 1 to 4, **characterised in that** the thermoplastic waste (12) is mixed plastic waste (12).

6. A method of making a plastic pallet (100) according to any one of claims 1 to 5, **characterised by**
- melting and mixing thermoplastic waste (12) to form a molten mass (13),
- forming the molten mass (13) into a prism-shape,
- forming the solidified mass (13) into prism-shaped solid elements (10),
- fastening the prism-shaped solid elements (10) together.

7. The method according to claim 6, **characterised by** forming the molten mass (13) into prism shape by pressing.

8. The method according to claim 6 or claim 7, **characterised by** creating a flat rectangular block (30) by shaping the molten mass (13) into a prism shape, and forming the elements (10) by cutting the block (30) to size.

9. The method according to any one of claims 6 to 8, **characterised by** shredding the plastic waste (12) prior to melting the thermoplastic waste (12).

10. The method according to any one of claims 6 to 9, **characterised by** fastening the prism-shaped solid elements (10) together by nailing.
